# FASCICULE DE BREVET EUROPEEN

(11) **EP 0 762 016 B1**
(45) Date de publication et mention de la délivrance du brevet: **22.11.2000**
(21) Numéro de dépôt: 96401906.1
(22) Date de dépôt: 05.09.1996
(51) Int. Cl.: F16H 55/36

(54) **Poulie anti-vibrations pour transmission à courroie**
Riemenscheibe mit Schwingungsunterdrückung für Zugmittelgetriebe
Anti-vibration pulley for belt drives

(30) Priorité: 12.09.1995 FR 9510675
(43) Date de publication de la demande: 12.03.1997
(73) Titulaire: SOCIETE FINANCIERE D'ETUDE ET DE DEVELOPPEMENT INDUSTRIEL ET TECHNOLOGIQUE - SOFEDIT, 78140 Velizy Villacoublay (FR)
(72) Inventeur: Doremus, Eric, 80130 Belloy sur Somme (FR); Guevel, Guy, 62390 Auxi-le-Château (FR); Magniez, Gérard, 92130 Issy-les-Moulineaux (FR)
(74) Mandataire: Moncheny, Michel

(56) Documents cités:
- EP-A- 0 241 808
- DE-A- 3 739 958
- DE-A- 4 336 559
- DE-C- 4 312 577

## Description

La présente invention concerne les poulies pour dispositifs de transmission à poulies et courroie, du type comprenant un moyeu et une couronne, reliés par une couche de matériau amortisseur, le moyeu étant adapté pour être relié à un arbre et la couronne étant formée dans sa surface radialement extérieure pour coopérer avec la courroie.

Dans une première réalisation connue (EP-A-241808) les surfaces en regard du moyeu et de la couronne, entre lesquelles est disposée la couche de matériau amortisseur, sont de forme tronconique et le matériau amortisseur est constitué par un élastomère adhérisé sur ces deux surfaces tronconiques. Une telle réalisation présente un certain nombre d'inconvénients :
- le fait d'utiliser un procédé d'adhérisation pour rendre l'élastomère solidaire du moyeu et de la couronne nécessite une préparation particulière de ces deux pièces, visant à leur donner un état de surface approprié ;
- l'adhérisation du caoutchouc sur le métal requiert un savoir-faire particulier ;
- les cadences de fabrication sont relativement faibles ;
- le caoutchouc adhérisé entre deux surfaces tronconiques parallèles ne peut pas être précontraint, de sorte qu'il supporte moins bien les vibrations et que les risques de désolidarisation des deux pièces ne sont pas négligeables ;
- dans les deux modes de réalisation envisagés dans le document antérieur, la couronne a une forme complexe, en particulier lorsqu'elle ne comporte aucun matériau de remplissage, cette forme complexe étant rendue nécessaire pour éviter la déformation de cette couronne extérieure.

On connaît aussi un état de la technique dans lequel une couronne moulée en fonte est reliée au moyeu par une couche de matériau élastomère. La couronne relativement lourde procure une inertie élevée et améliore les capacités de filtrage des vibrations. Par contre, le poids élevé et le coût de fabrication constituent deux inconvénients sérieux pour ce type de poulie.

Quant au document DE - 43 12 577, il décrit un ensemble de poulie muni de moyens élastiques de liaison, dans lequel une couronne comporte une aile intérieure noyée dans une masse de matériau élastomère, elle-même disposée entre une partie centrale et une aile extérieure du moyeu. Une telle disposition offre des inconvénients importants:
- elle ne permet pas un emmanchement à force de l'élastomère puisqu'il n'existe pas d'accès latéral à l'intervalle entre les deux ailes adjacentes du moyeu et de la couronne;
- il est impossible de couler une masse d'inertie dans la couronne;
- une partie de la couronne se trouvant radialement à l'intérieur du moyeu, toutes choses égales par ailleurs, le centre de gravité de cette couronne est rapproché de l'axe de la poulie, ce qui diminue son efficacité en tant que masse sismique.

En présence d'un tel état de la technique, le but recherché par l'invention est, pour une masse donnée de la poulie, d'obtenir une inertie et un pouvoir amortisseur plus élevés, ainsi qu'une capacité plus importante d'adaptation et donc de réglage des caractéristiques de la poulie.

A cet effet, l'invention a pour objet une poulie du type défini ci-dessus, caractérisée en ce que la couronne a une section transversale en U délimitée par des ailes intérieure et extérieure sensiblement parallèles à l'axe de la poulie de façon que cette couronne est susceptible de recevoir une masse d'inertie entre ces ailes, l'aile intérieure de la couronne étant disposée radialement à l'extérieur d'une aile du moyeu, sensiblement parallèle à l'axe de la poulie et la couche de matériau amortisseur comprenant une bague en élastomère emmanchée à force dans un intervalle délimité entre les deux ailes en regard de la couronne et du moyeu.

Suivant d'autres caractéristiques :
- une masse d'inertie est disposée dans au moins une partie de la section en U de la couronne ;
- cette masse d'inertie est du plomb coulé dans le volume interne de la couronne ;
- la masse d'inertie est une bague en métal fixée sur l'aile intérieure de la couronne avec interposition d'une deuxième couche de matériau amortisseur ;
- une douille métallique est interposée entre la deuxième couche de matériau amortisseur et l'aile intérieure de la couronne ;
- les surfaces en regard de la douille métallique et de la masse d'inertie, de même que la deuxième couche de matériau amortisseur comportent une partie sensiblement axiale et une partie tronconique ou radiale ;
- la masse d'inertie est coulée dans une bague à section en U disposée concentriquement dans la couronne.

L'invention va être décrite plus en détail ci-dessous en se référant aux dessins annexés sur lesquels :
- les figures 1 et 2 sont deux vues en coupe axiale de deux poulies correspondant à deux modes de réalisation de l'invention ;
- les figures 3 à 5 sont des vues partielles en coupe représentant trois autres variantes.

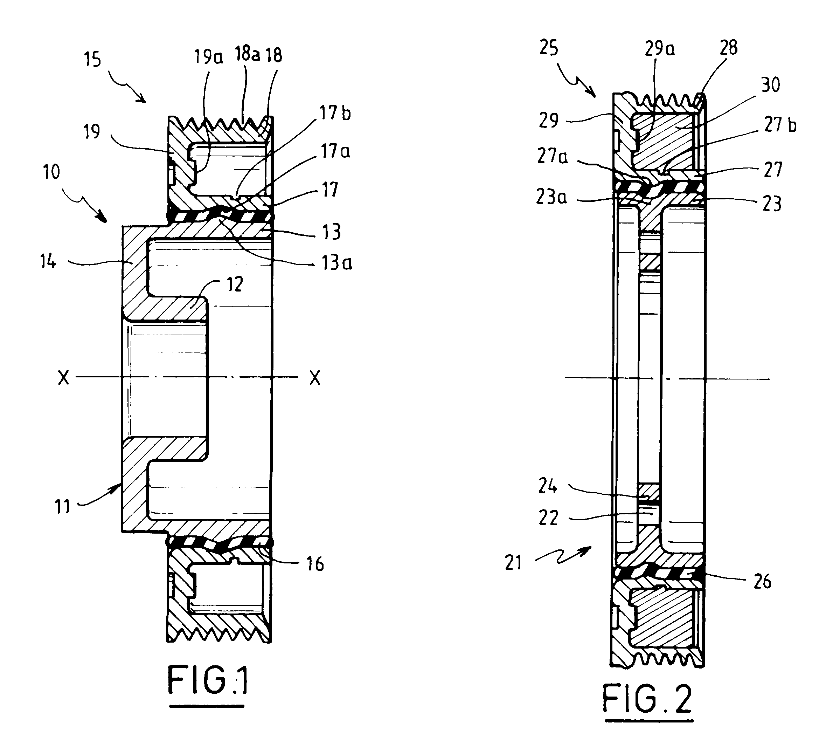

La figure 1 représente une poulie 10 destinée par exemple à être montée sur un vilebrequin (non représenté) de moteur de véhicule. Cette poulie comprend un moyeu 11 réalisé en tôle d'acier, ou bien encore en alliage léger ou en un matériau composite. Ce moyeu a une section sensiblement en U dont les deux ailes 12, 13 reliées par un fond radial 14, s'étendent sensiblement parallèlement à l'axe X-X de la poulie. L'aile 12 radialement intérieure est adaptée pour être fixée sur le vilebrequin tandis que l'aile 13 radialement extérieure est prévue pour recevoir une couronne 15, avec interposition d'une bague 16 en élastomère.

La couronne disposée à l'extérieur de l'aile 13 du moyeu a une section transversale en U, dont les deux ailes 17, 18 reliées par un fond radial 19 sont orientées sensiblement parallèlement à l'axe X-X. Les deux surfaces en regard du moyeu et de la couronne délimitent entre elles un intervalle et comportent respectivement une nervure et une rainure circonférentielles 13a, 17a de formes complémentaires, destinées à améliorer la solidarisation entre ces deux pièces, par l'intermédiaire de la couche d'élastomère. Cette dernière est introduite ou emmanchée à force dans l'intervalle délimité entre le moyeu et la couronne, l'épaisseur de la bague d'élastomère à l'état libre pouvant être environ le double de l'intervalle radial entre les deux ailes 13 et 17.

La couronne 15 peut être réalisée en acier ou en alliage léger. Cette couronne extérieure est emboutie, puis formée de façon connue pour comporter des stries ou des gorges circonférentielles 18a dans sa surface extérieure, et enfin usinée dans sa partie interne. Le fond 19 de cette couronne peut être plan ou comporter des tétons radiaux 19a dirigés vers le volume intérieur du U, de façon à réaliser un meilleur ancrage d'un matériau de garnissage, tel que cela sera décrit à propos de la figure 2. De même, au moins une rainure circonférentielle 17b peut être prévue dans la paroi de l'aile 17 dirigée vers l'intérieur du U.

Le matériau utilisé pour constituer la couche 16 de liaison entre le moyeu et la couronne peut être un élastomère : polychloroprène, styrène-butadiène (SBR) ou nitryl-butadiène (NBR) ou tout autre élastomère approprié.

Par mesure de sécurité, un cordon d'adhésif peut être prévu entre la couche 16 et au moins une des surfaces adjacentes 13, 17.

Dans le mode de réalisation de la figure 2, on retrouve un moyeu 21 et une couronne 25. Le moyeu a ici une section en T et les moyens de fixation sur un vilebrequin ou autre arbre devant supporter ce moyeu sont d'un type différent, comprenant un flasque radial 24 dans lequel sont ménagés des orifices 23 pour le passage de vis ou boulons de fixation (non représentés).

Les positions des nervure 27a et rainure 23a circonférentielles, ménagées dans les surfaces en regard du moyeu et de la couronne sont inversées par rapport au mode de réalisation de la figure 1. La couronne 25 est réalisée, à cette exception près, comme dans le cas de la figure 1 mais comporte de plus une masse 30 d'un matériau de garnissage qui est de préférence du plomb ou un autre matériau approprié devant de préférence posséder une masse volumique élevée, présenter un point de fusion relativement bas, une bonne adhérence sur l'acier et un coût faible. La quantité de plomb coulée dans le volume annulaire délimité par la couronne est choisie de façon à optimiser la masse et l'inertie de la poulie. Des moyens 27b, 29a sont prévus pour améliorer la solidarisation entre le plomb et la couronne.

D'une façon plus générale, la poulie suivant l'invention offre des possibilités accrues de réglage et d'ajustement de ses caractéristiques à celles de la pièce ou de l'ensemble sur lequel elle est montée. On peut ainsi "accorder" la fréquence propre de la poulie à celle du vilebrequin qui la porte. Pour cela, on peut, d'une part, jouer sur l'inertie de cette poulie, en choisissant convenablement la masse de plomb coulée dans la couronne extérieure, et, d'autre part, choisir convenablement la raideur de la couche 26 de matériau élastomère interposée entre le moyeu et la couronne. Le choix de cette raideur s'effectue en jouant sur la dureté du matériau utilisé et sur le taux d'écrasement de la bague en élastomère, qui a pour effet de modifier la raideur du matériau, à partir de celle qu'il présente à l'état libre.

En particulier dans son mode de réalisation de la figure 2, une poulie suivant l'invention permet d'amortir de façon très importante les vibrations angulaires ou vibrations en torsion subies par le vilebrequin. C'est ainsi que pour un moteur d'un type donné et pour une harmonique déterminée, l'amplitude de ces vibrations en torsion peut atteindre 0,3°. Une poulie suivant l'invention permet d'absorber l'essentiel de ces vibrations et de les ramener à une amplitude inférieure à 0,05° et ce quel que soit le régime du moteur. En fonction des caractéristiques que l'on souhaite obtenir, un compromis peut être effectué entre la masse de plomb fondue dans la couronne extérieure et la raideur de la couche d'élastomère. Si la masse de plomb est plus importante, l'inertie de la poulie augmente et la raideur du matériau élastomère doit être plus élevée. Dans tous les cas de figure, une diminution très importante de l'amplitude des vibrations en torsion peut être obtenue et ce par des moyens particulièrement économiques et avec un poids total faible.

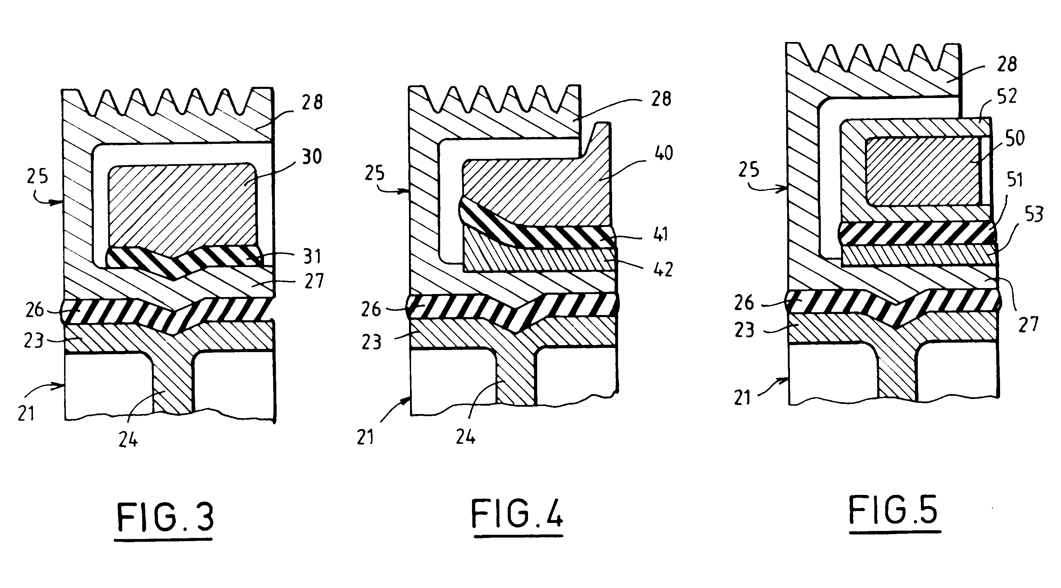

Dans le mode de réalisation de la figure 3, les éléments correspondant au mode de réalisation de la figure 2 sont désignés par les mêmes numéros de référence. La modification apportée par rapport à ce mode de réalisation de la figure 2 porte sur le fait que la masse 30 de plomb ou autre matériau équivalent est fixée sur l'aile inté27 de la couronne avec interposition d'une deuxième couche 31 de matériau d'élastomère.

Une telle disposition, si elle complique quelque peu la réalisation permet d'obtenir un accord de la poulie sur deux fréquences de valeurs différentes.

Un résultat analogue peut être obtenue grâce au mode de réalisation de la figure 4 dans lequel de plus, on peut réaliser un amortissement en torsion et en flexion grâce à une forme particulière des surfaces en regard d'une bague intermédiaire 42 fixée sur l'aile intérieure de la couronne et de la masselotte 40 en plomb ou matériau analogue. Les surfaces en regard de ces deux pièces comportent une partie de forme sensiblement cylindrique prolongée par une partie de forme tronconique, la couche 41 de matériau élastomère disposée entre les deux ayant bien entendu la même forme. La masselotte en plomb 40 a ainsi une certaine liberté de débattement axial ce qui permet d'amortir des vibrations en flexion. La partie de forme tronconique peut aussi être réalisée radiale. La couche 41 est de préférence introduite à force entre les bagues 40, 42 et/ou collée ou adhérisée sur ces deux bagues.

Dans le mode de réalisation de la figure 5, la masse d'inertie en plomb 50 est coulée dans une couronne 52 à section en U, disposée sensiblement concentriquement à la couronne 25 et c'est cette couronne 52 qui est reliée par une couche élastomère 51 à une douille de fixation 53 elle-même emmanchée sur l'aile intérieure 27 de la couronne 25. Cette réalisation certes un peu plus complexe permet de réaliser un amortissement des vibrations pour deux fréquences qui peuvent être définies de façon particulièrement précise.

## Revendications

1. Poulie pour dispositif de transmission à courroie, comprenant un moyeu (11 ; 21) et une couronne (15 ; 25), reliés par une couche (16 ; 26) de matériau amortisseur, le moyeu étant adapté pour être relié à un arbre et la couronne étant formée dans sa surface radialement extérieure pour coopérer avec la courroie, la couronne (15 ; 25) ayant une section transversale en U délimitée par des ailes intérieure et extérieure (17, 18 ; 27, 28) sensiblement parallèles a l'axe de la poulie, **caractérisée en ce que** la couronne est susceptible de recevoir une masse d'inertie (30 ; 40 ; 50) entre ces ailes, l'aile intérieure (17; 27) de la couronne étant disposée radialement à l'extérieur d'une aile (13; 23) du moyeu, sensiblement parallèle à l'axe de la poulie et la couche (16; 26) de matériau amortisseur étant emmanchée à force dans un intervalle délimité entre les deux ailes en regard de la couronne et du moyeu.

2. Poulie suivant la revendication 1, caractérisée en ce que la couronne en U (15;25) forme une masse d'inertie à elle seule.

3. Poulie suivant la revendication 1, caractérisée en ce qu'une masse d'inertie (30 ; 40 ; 50) est disposée dans au moins une partie de la section en U de la couronne (15 ; 25).

4. Poulie suivant la revendication 3, caractérisée en ce que la masse d'inertie est du plomb coulé dans le volume interne, annulaire de la couronne.

5. Poulie suivant la revendication 4, caractérisée en ce que la couronne comporte des moyens (17b, 19a ; 27b, 29a) pour améliorer la solidarisation entre le plomb coulé et la couronne.

6. Poulie suivant la revendication 3, caractérisée en ce que la masse d'inertie (30 ; 40 ; 50) est une bague en métal fixée sur l'aile intérieure (27) de la couronne avec interposition d'une deuxième couche (31 ; 41 ; 51) de matériau amortisseur.

7. Poulie suivant la revendication 6, caractérisée en ce qu'une douille métallique (42) est interposée entre la deuxième couche (41) de matériau amortisseur et l'aile intérieure (27) de la couronne.

8. Poulie suivant la revendication 7, caractérisée en ce que les surfaces en regard de la douille métallique (42) et de la masse d'inertie (40), de même que la deuxième couche (41) de matériau amortisseur comportent une partie sensiblement axiale et une partie tronconique ou radiale.

9. Poulie suivant l'une quelconque des revendications 7 et 8, caractérisée en ce que la deuxième couche (41) de matériau amortisseur est adhérisée sur les surfaces des pièces adjacentes.

10. Poulie suivant la revendication 3, caractérisée en ce que la masse d'inertie (50) est coulée dans une bague (52) à section en U disposée concentriquement dans la couronne (25).

11. Poulie suivant l'une quelconque des revendications 1 à 9, caractérisée en ce que la première couche (16; 26) de matériau amortisseur est de plus adhérisée sur au moins l'une des pièces entre lesquelles elle est emmanchée à force.

12. Poulie suivant l'une quelconque des revendications 1 à 11, caractérisée en ce que la couronne comporte dans sa surface extérieure des gorges circonférentielles (18a).

13. Poulie suivant l'une quelconque des revendications 2 à 12, caractérisée en ce que la raideur de la première couche de matériau amortisseur est d'autant plus élevée que la valeur de la masse d'inertie est plus importante.

14. Poulie suivant l'une quelconque des revendications précédentes, caractérisée en ce que la couronne est une pièce en tôle.

## Patentansprüche

1. Riemenscheibe für Riemenübertragungsvorrichtung mit einer Nabe (11; 21) und einem Kranz (15; 25), die durch eine Schicht (16; 26) aus Dämpfungsmaterial miteinander verbunden sind, wobei die Nabe so beschaffen ist, daß sie mit einer Welle verbunden werden kann, und der Kranz in ihrer radial äußeren Oberfläche gebildet ist, um mit dem Riemen zusammenzuwirken, wobei der Kranz (15; 25) einen U-förmigen Querschnitt besitzt, der durch innere und äußere Flügel (17, 18; 27, 28) begrenzt ist, die zur Achse der Riemenscheibe im wesentlichen parallel sind, dadurch gekennzeichnet, daß der Kranz zwischen diesen Flügeln eine Schwungmasse (30; 40; 50) aufnehmen kann, wobei der innere Flügel (17; 27) des Kranzes radial außerhalb eines Flügels (13; 23) der Nabe im wesentlichen parallel zur Achse der Riemenscheibe angeordnet ist und die Schicht (16; 26) aus Dämpfungsmaterial in einen Zwischenraum gepreßt ist, der zwischen den beiden Flügeln gegenüber dem Kranz und der Nabe begrenzt ist.

2. Riemenscheibe nach Anspruch 1, dadurch gekennzeichnet, daß der U-förmige Kranz (15; 25) allein eine Schwungmasse bildet.

3. Riemenscheibe nach Anspruch 1, dadurch gekennzeichnet, daß eine Schwungmasse (30; 40; 50) in wenigstens einem Teil des U-förmigen Querschnitts des Kranzes (15; 25) angeordnet ist.

4. Riemenscheibe nach Anspruch 3, dadurch gekennzeichnet, daß die Schwungmasse aus Blei besteht, das in das innere ringförmige Volumen des Kranzes gegossen ist.

5. Riemenscheibe nach Anspruch 4, dadurch gekennzeichnet, daß der Kranz Mittel (17b, 19a; 27b, 29a) zum Verbessern der Befestigung zwischen dem gegossenen Blei und dem Kranz umfaßt.

6. Riemenscheibe nach Anspruch 3, dadurch gekennzeichnet, daß die Schwungmasse (30; 40; 50) ein Metallring ist, der am inneren Flügel (27) des Kranzes befestigt ist, wobei dazwischen eine zweite Schicht (31; 41; 51) aus Dämpfungsmaterial eingefügt ist.

7. Riemenscheibe nach Anspruch 6, dadurch gekennzeichnet, daß zwischen die zweite Schicht (41) aus Dämpfungsmaterial und den inneren Flügel (27) des Kranzes eine Metallhülse (42) eingefügt ist.

8. Riemenscheibe nach Anspruch 7, dadurch gekennzeichnet, daß die Oberflächen gegenüber der Metallhülse (42) und gegenüber der Schwungmasse (40) ebenso wie die zweite Schicht (41) aus Dämpfungsmaterial einen im wesentlichen axialen Abschnitt und einen kegelstumpfförmigen oder radialen Abschnitt umfassen.

9. Riemenscheibe nach einem der Ansprüche 7 und 8, dadurch gekennzeichnet, daß die zweite Schicht (41) aus Dämpfungsmaterial an die Oberflächen der angrenzenden Teile angeklebt ist.

10. Riemenscheibe nach Anspruch 3, dadurch gekennzeichnet, daß die Schwungmasse (50) in einen Ring (52) mit U-förmigem Querschnitt gegossen ist, der im Kranz (25) konzentrisch angeordnet ist.

11. Riemenscheibe nach einem der Ansprüche 1 bis 9, dadurch gekennzeichnet, daß die erste Schicht (16; 26) aus Dämpfungsmaterial außerdem an wenigstens eines der Teile angeklebt ist, zwischen die sie gepreßt ist.

12. Riemenscheibe nach einem der Ansprüche 1 bis 11, dadurch gekennzeichnet, daß der Kranz an seiner äußeren Oberfläche Umfangsrillen (18a) aufweist.

13. Riemenscheibe nach einem der Ansprüche 2 bis 12, dadurch gekennzeichnet, daß der Radius der ersten Schicht aus Dämpfungsmaterial um so größer ist, je größer der Wert der Schwungmasse ist.

14. Riemenscheibe nach einem der vorhergehenden Ansprüche, dadurch gekennzeichnet, daß der Kranz ein Blechteil ist.

## Claims

1. Pulley for a belt drive arrangement, comprising a hub (11; 21) and a rim (15; 25) which are connected by a layer (16; 26) of damping material, the hub being adapted to be connected to a shaft and the rim being formed in its radially exterior surface so as to co-operate with the belt, the rim (15; 25) having a U-shaped transverse section which is delimited by interior and exterior wings (17; 18, 27: 28) which are substantially parallel to the axis of the pulley, characterised in that
the rim is able to receive an inert mass (30; 40; 50) between these wings, the interior wing (17; 27) of the rim being disposed radially to the exterior of a wing (13; 23) of the hub and substantially parallel to the axis of the pulley and the layer (16: 26) of damping material being force-fitted in a delimited gap between the two facing wings of the rim and the hub.

2. Pulley according to claim 1, characterised in that the U-shaped rim (15; 25) forms an inert mass of its own accord.

3. Pulley according to claim 1, characterised in that an inert mass (30; 40; 50) is disposed in at least one part of the U-section of the rim (15; 25).

4. Pulley according to claim 3, characterised in that the inert mass is made of lead which is cast into the internal volume which is annular to the rim.

5. Pulley according to claim 4, characterised in that the rim comprises means (17b, 19a; 27b, 29a) for improving the interdependence between the cast lead and the rim.

6. Pulley according to claim 3, characterised in that the inert mass (30; 40; 50) is a collar which is made of metal and fixed on the interior wing (27) of the rim with intermediate positioning of a second layer (31; 41; 51) of damping material.

7. Pulley according to claim 6, characterised in that a metallic bush (42) is positioned intermediately between the second layer (41) of damping material and the interior wing (27) of the rim.

8. Pulley according to claim 7, characterised in that the surfaces facing the metallic bush (42) and the inert mass (40), as well as the second layer (41) of damping material, comprise a substantially axial part and a truncated or radial part.

9. Pulley according to any of the claims 7 and 8, characterised in that the second layer (41) of damping material is affixed to the surfaces of the adjacent pieces.

10. Pulley according to claim 3, characterised in that the inert mass (50) is cast in a collar (52) having a U-section and disposed concentrically in the rim (25).

11. Pulley according to any of the claims 1 to 9, characterised in that the first layer (16; 26) of damping material is in addition affixed to at least one of the pieces between which said layer is force-fitted.

12. Pulley according to any of the claims 1 to 11, characterised in that the rim comprises circumferential grooves (18a) in its exterior surface.

13. Pulley according to any of the claims 2 to 12, characterised in that the rigidity of the first layer of damping material is all the greater when the value of the inert mass is greater.

14. Pulley according to any of the preceding claims, characterised in that the rim is a sheet metal piece.
